(19) Europäisches Patentamt

European Patent Office

Office européen des brevets

(11) **EP 0 624 065 B1**

(12) **FASCICULE DE BREVET EUROPEEN**

(45) Date de publication et mention
de la délivrance du brevet:
**06.03.1996 Bulletin 1996/10**

(21) Numéro de dépôt: **93904132.3**

(22) Date de dépôt: **28.01.1993**

(51) Int. Cl.$^6$: **A23N 15/04**

(86) Numéro de dépôt international: **PCT/FR93/00088**

(87) Numéro de publication internationale:
**WO 93/14653 (05.08.1993 Gazette 1993/19)**

(54) **DISPOSITIF DE TRAITEMENT AUTOMATIQUE DE CHAMPIGNONS A CADENCE DE TRAITEMENT OPTIMALE**

AUTOMATISCHE VERARBEITUNGSEINRICHTUNG FÜR PILZE MIT OPTIMALER ARBEITSFOLGE

AUTOMATIC MUSHROOM PROCESSING DEVICE HAVING AN OPTIMAL PROCESSING RATE

(84) Etats contractants désignés:
**BE DE ES FR GB IE IT NL**

(30) Priorité: **31.01.1992 FR 9201077**

(43) Date de publication de la demande:
**17.11.1994 Bulletin 1994/46**

(73) Titulaires:
• **S.A. ROYAL CHAMPIGNON**
**F-49400 Saumur (FR)**
Etats contractants désignés:
**BE DE ES FR GB IE IT NL**

• **ROBOLIX**
**F-32430 Cologne (FR)**
Etats contractants désignés:
**FR**

(72) Inventeur: **MEULNART, Alain**
**F-75016 Paris (FR)**

(74) Mandataire: **Warcoin, Jacques et al**
**Cabinet Régimbeau,**
**26, avenue Kléber**
**F-75116 Paris (FR)**

(56) Documents cités:
**WO-A-91/02450**      **FR-A- 2 337 591**
**FR-A- 2 384 462**

**Description**

La présente invention concerne un dispositif de traitement automatique de champignons.

L'invention trouve une application particulièrement avantageuse dans le domaine du parage des champignons de couche, ou champignons de Paris, notamment avant leur mise en conserve.

On connaît de la demande de brevet français n° 91 07782 au nom de la Demanderesse un dispositif de traitement automatique de champignons constitué par une installation de coupe de pieds de champignons comprenant des moyens de transport destinés à amener lesdits champignons à un poste de coupe comportant un organe de coupe destiné à parer individuellement les champignons. Ledit poste de coupe de cette installation connue comprend un moyen de détection, un dispositif optique de reconnaissance de forme par exemple, apte à déterminer la longueur du pied de chaque champignon. Des moyens de commande sont également prévus pour ajuster la position relative de l'organe de coupe et du pied de champignon en fonction de la longueur du pied déterminé par ledit moyen de détection. Bien entendu, cette opération d'ajustement n'est pas effectuée de manière instantanée mais exige un certain délai, dit temps de réponse Tr, qui sépare l'instant ou un champignon est pris en compte par le moyen de détection et celui où l'organe de coupe atteint la position de coupe correspondant à la longueur du pied dudit champignon. L'organe de coupe utilisé peut, à titre d'exemple, être constitué par deux lames de scie coplanaires tournant en sens contraire. D'une manière générale. l'organe de coupe présente une certaine distance C de parage définie comme la distance parcourue par un champignon entre le moment de début de coupe et le moment de fin de coupe.

Les moyens de transport sont alimentés en champignons par un dispositif d'alimentation fournissant sous un débit moyen D donné des champignons calibrés de calibre Cal donné. On appellera calibre la valeur moyenne dans un intervalle donné du diamètre du chapeau des champignons.

L'installation connue de l'état de la technique utilise comme moyens de transport au moins un jeu de courroies et, plus particulièrement. deux jeux de courroies successives dont le deuxième est accéléré par rapport au premier de manière à augmenter la distance entre deux champignons consécutifs afin de laisser à l'organe de coupe, compte tenu de la distance C de parage, un espace suffisant pour se déplacer entre les pieds desdits deux champignons consécutifs.

Bien entendu, un dispositif de traitement automatique de champignons peut comporter, d'une façon générale, d'autres postes de traitement qu'un poste de coupe tel qu'un poste d'éjection des champignons non conformes, chaque poste de traitement étant défini par un temps de réponse $Tr_i$ et une distance $C_i$ de traitement, i variant de 1 au nombre N de postes. Le dispositif de traitement est alors soumis, en ce qui concerne les moyens de transport des champignons, à des contraintes de deux types :

- les champignons doivent être traités par unité, ce qui impose la présence d'un seul champignon sur la distance $C_i$ de traitement de chaque poste de traitement ;
- l'intervalle de temps entre deux champignons doit être suffisant pour permettre à chaque organe de traitement, compte tenu du temps de réponse $Tr_i$, d'être commandé par lesdits moyens de commande respectifs avant que ledit champignon se présente audit organe de traitement.

Par un choix approprié des vitesses des courroies, l'installation de coupe précédemment décrite peut satisfaire à ces deux conditions. toutefois elle ne permet pas toujours, notamment dans le cas d'une alimentation manuelle, d'obtenir un flux régulier de champignons en ce sens que, pour un débit D moyen donné, la distance spatiale ou temporelle entre deux champignons consécutifs peut être trop faible pour que les conditions énoncées ci-dessus soient satisfaites.

Aussi, le but de la présente invention est de proposer un dispositif de traitement automatique de champignons de calibre Cal donné, comportant des moyens de transport destinés à amener lesdits champignons à au moins un poste de traitement comprenant un moyen de détection apte à déterminer un paramètre relatif à chaque champignon, un organe de traitement destiné à traiter individuellement les champignons sur une distance $C_i$ de traitement donnée, et des moyens de commande aptes à commander, avec un temps de réponse $Tr_i$, l'organe de traitement en fonction du paramètre déterminé par ledit moyen de détection, dispositif qui permettrait, à la fois, de satisfaire aux deux contraintes précitées et d'assurer un flux régulier de champignons au niveau du poste de coupe.

Selon l'invention, ce but est atteint du fait que lesdits moyens de transport comportent un premier jeu de courroies, dites réceptrices, destinées à recevoir les champignons sous un débit moyen D donné au plus égal à $min(1/Tr_i)$ et animées d'une vitesse $V_0$ au moins égale à Cal x D, un deuxième jeu de courroies, dites accumulatrices, animées d'une vitesse $V_1$ choisie sensiblement égale à Cal x D, et un troisième jeu de courroies, dites séparatrices, animées d'une vitesse $V_2$ choisie au moins égale à $Max(C_i/(1/D - Tr_i))$ .

Ainsi, la vitesse $V_1$ des courroies accumulatrices est telle que les champignons viennent sensiblement se placer sur lesdites courroies chapeau contre chapeau, donc avec une distance de séparation relativement régulière et égale au calibre des champignons. D'autre part, comme on le verra en détail plus loin, le débit D de champignons et la vitesse $V_2$ des courroies séparatrices tels que définis ci-dessus permettent de réaliser les deux conditions de base rappelées plus haut.

De façon à maintenir ces conditions vérifiées tout du long des courroies séparatrices en évitant notamment un éventuel glissement des champignons, il est prévu que le dispositif selon l'invention comprend également, sur le trajet desdites courroies séparatrices, au moins un tapis presseur défilant à la vitesse $V_2$, destiné à maintenir lesdits champignons contre lesdites courroies.

La description qui va suivre en regard du dessin annexé, donné à titre d'exemple non limitatif, fera bien comprendre en quoi consiste l'invention et comment elle peut être réalisée.

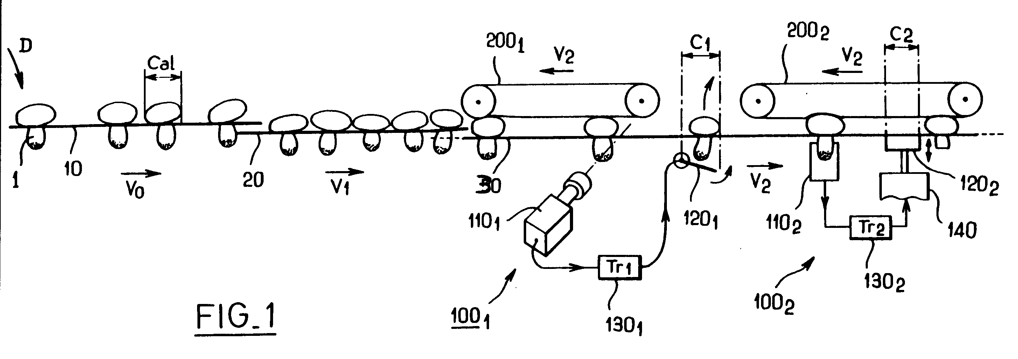

La figure 1 est une vue de côté d'un dispositif de traitement automatique de champignons conforme à l'invention.

La figure 1 donne le schéma d'un dispositif de traitement automatique de champignons. Ce dispositif est alimenté en champignons de calibre Cal donné, pouvant varier de 15 à 60 mm en moyenne, par des moyens d'alimentation, non représentés, sous un débit moyen D donné, de 10 champignons/s par exemple.

Le dispositif de traitement automatique représenté sur la figure 1 comporte des moyens 10, 20, 30 de transport des champignons vers un premier poste $100_1$ d'éjection comprenant un moyen $110_1$ de détection constitué, dans le mode de réalisation de la figure 1, par une caméra permettant, par exemple, de déterminer la forme de chaque champignon, un organe $120_1$ d'éjection destiné à éjecter les champignons individuellement sur une distance $C_1$ d'éjection, et des moyens $130_1$ de commande aptes à commander, avec un temps $Tr_1$ de réponse, l'organe $120_1$ d'éjection si la forme du champignon déterminé par la caméra $110_1$ ne satisfait pas à une norme donnée. Le poste $100_1$ d'éjection est suivi d'un second poste $100_2$ de coupe analogue à celui décrit dans la demande de brevet français n° 91 07782. Dans l'exemple montré à la figure 1, le poste $100_2$ de coupe comprend un moyen $110_2$ de détection constitué par exemple par un capteur optique. Ce moyen de détection a pour fonction de déterminer la longueur du pied de chaque champignon. Le poste $100_2$ de coupe comprend également un organe $120_2$ de coupe destiné à parer individuellement les champignons sur une distance $C_2$ de parage donnée. L'organe $120_2$ de coupe de la figure 1 est formé par deux scies circulaires coplanaires tournant en sens contraire sous l'action d'un moteur 140. Dans ce cas, la distance $C_2$ de parage est sensiblement égale à l'encombrement sagittal des scies, soit environ 35 mm comme cela a été réalisé par la Demanderesse dans un exemple de mise en oeuvre particulier. Des moyens $130_2$ de commande sont en outre prévus pour ajuster, avec un temps de réponse $Tr_2$, la position relative de l'organe $120_2$ de coupe et du pied 1 de champignon en fonction de la longueur de pied déterminée par ledit moyen $110_2$ de détection, selon des modalités décrites dans la demande de brevet précitée.

Comme on peut le voir sur la figure 1, les moyens de transport des champignons comprennent un premier jeu de courroies 10, dites réceptrices, destinées à recevoir lesdits champignons sous ledit débit moyen D. La vitesse $V_0$ desdites courroies réceptrices 10 est réglée de manière à conserver le débit d'alimentation. Pour cela, il y a avantage à ce que la distance moyenne entre deux champignons consécutifs, c'est-à-dire $V_0/D$, soit au moins égale au calibre Cal des champignons. On en déduit que la vitesse $V_0$ doit être au moins égale à Cal x D. Pour un calibre de 40 mm et un débit moyen D de 10 champignons/s, on en déduit :

$$V_0 \geqq 0,4 \text{ m/s}$$

En pratique, on choisira $V_0$ supérieure à 0,6 m/s de façon à assurer une prise correcte des champignons, ce qui impose que, compte tenu des irrégularités du débit, les champignons soient suffisamment séparés pour ne pas se gêner. De même, la vitesse $V_0$ sera prise inférieure à 1 m/s par exemple pour ne pas donner aux champignons des chocs trop brusques et pour limiter la longueur des courroies réceptrices.

D'une manière générale, les champignons arrivent sur le premier jeu de courroies de façon irrégulière. Aussi, pour remédier à cet inconvénient, les champignons sont accumulés sur un deuxième jeu de courroies 20, dites accumulatrices, animées d'une vitesse $V_1$ susceptible de fournir un flux régulier de champignons, c'est-à-dire, en pratique, des champignons disposés chapeau contre chapeau le long desdites parois accumulatrices 20. En conséquence, pour réaliser cette condition, $V_1$ doit être choisie au voisinage de Cal x D, soit :

$$V_1 \simeq 0,4 \text{ m/s}$$

Si l'on veut assurer une accumulation parfaite, la vitesse $V_1$ devra être prise légèrement inférieure à Cal x D, au risque de ralentir le débit des champignons et de créer un engorgement à l'entrée des courroies accumulatrices 20. Par contre, une vitesse $V_1$ quelque peu supérieure à Cal x D permettra de maintenir le débit D initial au cours du transport sur le deuxième jeu de courroies, au détriment toutefois de la régularité de la cadence.

Enfin, un troisième jeu de courroies 30, dites séparatrices, est animé d'une vitesse $V_2$ choisie de manière à satisfaire les deux contraintes rappelées ci-dessus. Ces contraintes s'expriment par :

$$V_2/D \geqq C_1 + V_2 \times Tr_1 \qquad V_2/D \geqq C_2 + V_2 \times Tr_2$$

$$\text{soit : } V_2 \geqq C_1 (1/D - Tr_1) \qquad V_2 \geqq C_2(1/D - Tr_2)$$

$$\text{d'où globalement } V_2 \geqq Max((C_i/(1/D - Tr_i)) \qquad i = 1,2$$

avec les conditions supplémentaires $1/D-Tr_1 \geqq 0$ et $1/D-Tr_2 \geqq 0$

$$soit : D \geqq min(1/Tr_i)$$

avec, par exemple, un temps de réponse maximal de 0,70 ms
on doit avoir $D \leqq 14$ champignons/s
ce qui est vérifié par $D = 10$ champignons/s.

Pour une distance de traitement maximale de 35 mm par exemple on trouve $V_2 \geqq 1,17$ m/s.

Le dispositif de traitement automatique ainsi décrit permet d'obtenir une cadence optimale et régulière des champignons. De façon à communiquer aux champignons la vitesse $V_2$ des courroies séparatrices, à conserver cette cadence malgré les risques de blocage, par exemple contre les glissières servant au guidage des courroies, et également contre le glissement que peuvent subir les champignons au moment de l'accélération imprimée par les courroies séparatrices 30, le dispositif selon l'invention comporte également, conformément à la figure 1, sur le trajet des courroies séparatrices, deux tapis presseurs $200_1$, $200_2$ défilant à la vitesse $V_2$ et destinés à maintenir lesdits champignons contre lesdites courroies séparatrices. Lesdits tapis presseurs sont réalisés, avantageusement, en matériau plastique du type mousse.

### Revendications

1. Dispositif de traitement automatique de champignons de calibre Cal donné, comportant des moyens (10, 20, 30) de transport destinés à amener lesdits champignons à au moins un poste ($100_i$) de traitement comprenant un moyen ($110_i$) de détection apte à déterminer un paramètre relatif à chaque champignon, un organe ($120_i$) de traitement destiné à traiter individuellement les champignons sur une distance $C_i$ de traitement donnée, et des moyens ($130_i$) de commande aptes à commander, avec un temps de réponse $Tr_i$, l'organe ($120_i$) de traitement en fonction du paramètre déterminé par ledit moyen ($110_i$) de détection, caractérisé en ce que lesdits moyens de transport comportent un premier jeu de courroies (10), dites réceptrices, destinées à recevoir les champignons sous un débit moyen D donné au plus égal à $min(1/Tr_i)$ et animées d'une vitesse $V_0$ au moins égale à Cal x D, un deuxième jeu de courroies (20), dites accumulatrices, animées d'une vitesse $V_1$ choisie sensiblement égale à Cal x D, et un troisième jeu de courroies (30), dites séparatrices, animées d'une vitesse $V_2$ choisie au moins égale à $max(C_i/(1/D-Tr_i))$ .

2. Dispositif selon la revendication 1, caractérisé en ce qu'il comprend également, sur le trajet desdites courroies séparatrices (30), au moins un tapis presseur ($200_1$, $200_2$) défilant à la vitesse $V_2$, destiné à maintenir lesdits champignons contre lesdites courroies (30).

3. Dispositif selon la revendication 1 ou 2, caractérisé en ce qu'un poste de traitement dudit dispositif est un poste de coupe ($100_2$) de pieds (1) de champignons comprenant un moyen ($110_2$) de détection apte a déterminer la longueur du pied de chaque champignon, un organe ($120_2$) de coupe destiné à parer individuellement les champignons sur une distance $C_2$ de parage donné, et des moyens ($130_2$) de commande aptes à ajuster avec un temps de réponse $Tr_2$ la position relative de l'organe de coupe et du pied de champignon en fonction de la longueur de pied déterminé par ledit moyen ($110_2$) de détection.

### Claims

1. A device for automatically processing mushrooms of given caliber Cal, the device including conveyor means (10, 20, 30) designed to bring said mushrooms to at least one processing station ($100_i$) including detection means ($110_i$) suitable for determining a parameter relating to each mushroom, a processing member ($120_i$) for processing the mushrooms individually over a given processing distance $C_i$, and control means ($130_i$) suitable for bringing the processing member ($120_i$) into operation after a response time $Tr_i$ and as a function of the parameter determined by said detection means ($110_i$), the device being characterized in that said conveyor means include a "receiver" first set of belts (10) designed to receive the mushrooms at a given mean flow rate D not greater than $min[1/Tr_i]$ and driven at a speed $V_0$ not less than Cal x D, an "accumulator" second set of belts (20) driven at a speed $V_1$ selected to be substantially equal to Cal x D, and a "separator" third set of belts (30) driven at a speed $V_2$ selected to be not less than $max[C_i/[1/D-Tr_i]]$ .

2. A device according to claim 1, characterized in that it also includes at least one presser belt ($200_1$, $200_2$) on the path of said separator belts (30) and running at the speed $V_2$ for the purpose of holding said mushrooms against said separator belts (30).

3. A device according to claim 1 or 2, characterized in that one of the processing stations of said device is a station ($100_2$) for cutting the stems (1) of the mushrooms and comprising detection means ($110_2$) suitable for determining the length of the stem of each mushroom, a cutting member ($120_2$) for individually trimming the mushrooms over a given trimming distance $C_2$, and control means ($130_2$) having a response time $Tr_2$ and suitable for adjusting the relative position of the cutting member and of the mushroom stem as a function of the length of the stem as determined by said detection means ($110_2$).

**Patentansprüche**

1. Automatische Verarbeitungseinrichtung für Pilze mit einer bestimmten Abmessung Cal, enthaltend Mittel (10, 20, 30) für den Transport, welche die Pilze an mindestens einen Verarbeitungsposten ($100_i$) transportieren, welcher ein Detektormittel ($110_i$) aufweist, das geeignet ist, einen sich auf jeden einzelnen Pilz beziehenden Parameter festzustellen, und mit einem Verarbeitungselement ($120_i$) für die individuelle Bearbeitung der Pilze in einem bestimmten Bearbeitungsabstand $C_i$, und mit Steuerungsmitteln ($130_i$), um das Verarbeitungselement mit einer Reaktionszeit $Tr_i$ je nach dem von dem Detektor ($110_i$) festgestellten Parameter zu steuern,
   **dadurch gekennzeichnet, daß** diese Transportmittel einen ersten Satz als Aufnahmebänder dienende Laufbänder (10) enthalten, welche die Pilze mit einem bestimmten mittleren Durchsatz D von höchstens $\min(1/Tr_i)$ aufnehmen und die sich mit einer Geschwindigkeit $V_0$ von mindestens Cal x D bewegen, sowie einen zweiten Satz als Sammelbänder dienende Laufbänder (20) aufweisen, welche sich mit einer Geschwindigkeit $V_1$ bewegen, welche weitgehend gleich Cal x D gewählt wird, und dadurch, daß sie einen dritten Satz als Trennbänder dienende Laufbänder (30) aufweisen, welche sich mit einer Geschwindigkeit $V_2$ bewegen, die mindestens gleich $\text{Max}((C_i/(1/D-Tr_i))$ gewählt wird.

2. Verarbeitungeinrichtung nach Anspruch 1,
   **dadurch gekennzeichnet, daß** sie weiterhin auf der Laufbahn der Trennbänder (30) mindestens einen Preßteppich ($200_1$, $200_2$) aufweist, welcher sich mit einer Geschwindigkeit $V_2$ bewegt und dafür bestimmt ist, die Pilze an den Laufbändern (30) zu halten.

3. Verarbeitungseinrichtung nach einem der Ansprüche 1 oder 2,
   **dadurch gekennzeichnet, daß** einer der Bearbeitungsposten dieser Verarbeitungseinrichtung ein Schneidposten ($100_2$) für das Abschneiden der Pilzstiele (1) ist, welcher ein Detektormittel ($110_2$) aufweist, das geeignet ist, die Länge des Stiels der einzelnen Pilze festzustellen, und daß ein Schneidelement ($120_2$) für das indivduelle Verputzen in einem vorbestimmten Abstand $C_2$ vorgesehen ist, sowie Steuerungsmittel ($130_2$), welche mit einer Reaktionszeit $Tr_2$ die relative Position des Schneidelementes und des Stiels des Pilzes je nach der Länge des Stiels steuern, welche von dem Detektormittel ($110_2$) gemessen wurde.

FIG_1

EP 0 624 065 B1